# EUROPEAN PATENT SPECIFICATION

(11) **EP 4 493 450 B1**
(45) Date of publication and mention of the grant of the patent: **25.11.2026**
(21) Application number: 23714833.3
(22) Date of filing: 10.03.2023
(51) Int. Cl.: B62J 15/04

(54) **VEHICLE COMPRISING A RADIATOR MUD FLAP**
FAHRZEUG MIT EINER KÜHLERSCHLAMMKLAPPE
VÉHICULE COMPRENANT UN GARDE-BOUE DE RADIATEUR

(30) Priority: 16.03.2022 IT 202200005114
(43) Date of publication of application: 22.01.2025
(73) Proprietor: Piaggio & C. SpA, 56025 Pontedera (Pisa) (IT)
(72) Inventor: GRACCI, Alberto, 56025 Pontedera (IT)
(74) Representative: Carangelo, Pierluigi
(86) International application number: PCT/IB2023/052295
(87) International publication number: WO 2023/175457

(56) References cited:
- WO-A1-2005/070749
- JP-A- 2004 338 467
- JP-A- 2012 091 704
- JP-U- S50 115 354
- US-A1- 2006 077 677
- OOSTVOGELS BART: "MOTORTEST - YAMAHA TRICITY 300 (2020) Waarom drie wielen voordeel bieden boven twee wielen? 11 sep 2020, 14:08 - Motortests, Nieuws", 11 September 2020 (2020-09-11), motorrai.nl, pages 1 - 15, XP093046243, Retrieved from the Internet <URL:https://motorrai.nl/motortest-yamaha-tricity-300-2020/> [retrieved on 20230511]

## Description

### TECHNOLOGICAL FIELD

The present invention relates to the field of motorcycles, i.e., rideable-saddle vehicles of the rolling type, i.e., provided with a rolling motion about a median axis extending longitudinally along the vehicle. Rolling motorcycles are typically three-wheeled or four-wheeled motorcycles, with two front steering wheels and one or two rear driving wheels. The rolling motion allows the motorcycle to tilt while driving, e.g., while driving along a curve.

### BACKGROUND ART

In the prior art, it is known to arrange a radiator, generally of the engine, behind the front wheel or the front wheels of the vehicle. On a vehicle with two wheels in line, such as a motorcycle, the placement behind the front wheel of the engine radiator has been known for decades, suffice it to mention all the road racing motorcycles, for example. On multi-wheeled vehicles, in particular three-wheeled vehicles, it is equally known to arrange the radiator behind and in the middle of the wheels. An example of this is provided by EP2889210A1 or the Yiben brand vehicle model YB250ZKT shown to the public in 2011.

On this type of three-wheeled vehicle, when the two front wheels roll on wet ground, splashes of water, debris, and mud are lifted off from the sidewalls of the wheels and diverge outwards from each of the wheels. Thus, the splashes of both the right and left wheels converge in the median zone of the vehicle. Therefore, if the radiator is located behind and between the front wheels, the splash flow striking the radiator is very high.

In this context, the risk of mud or debris reaching the radiator is very high, and traditionally this problem has been solved by arranging the radiator behind a protection grid and in a position slightly set back therefrom and/or in a position more elevated above the ground, so as to decrease the risk of the radiator getting dirty and losing efficiency. However, this solution limits the airflow through the radiator, affecting the performance thereof.

Furthermore, three-wheeled vehicles, in particular the rolling vehicles, experience increased vibration above a certain speed due to poor aerodynamics compared to a two-wheeled motorcycle. These vibrations can be uncomfortable for the driver, especially on long journeys. It is known to dampen vibrations by means of hydraulic-type dampers, such as that described in CN102092435, but these solutions are expensive and affected by the ambient temperature, which biases the viscosity of the liquid flowing through the hydraulic damper.

In the prior art, it is also known to arrange a fin under the radiator to protect it from dirt or mud from the front wheel of a vehicle. Examples of this are described in documents JP2004338467 and JPS50115354U. These documents teach to arrange the radiator behind the front wheel and thus in a position in which the fouling of the radiator with mud or dirt from the front wheel is even more likely. The document XP093046243 discloses a multi-wheels rolling vehicle in accordance with the preamble of claim 1.

Thus, the prior art does not provide a solution that:
- is simple and inexpensive to produce;
- is quick to maintain;
- allows protecting a radiator from splashes of water, debris, and mud, which affect the efficiency thereof; and
- allows increasing the vehicle stability at high speeds.

### SUMMARY

It is an object of the present invention to solve the aforementioned drawbacks of the prior art by means of a multi-wheels vehicle comprising two front steering and rolling wheels mutually spaced apart along a right-left direction, at least one rear driving and rolling wheel, a radiator arranged behind and between said front steering wheels and a mud flap arranged in front of said radiator so as to cover it at least partially. The mud flap comprises a finned body provided with a plurality of fins and configured to cover the radiator at least partially, and a protuberance arranged on a lower portion of said finned body. Said protuberance is shaped so as to protrude forward with respect to the finned body and the protuberance is longer than the fins and protrudes forward therefrom. When the front wheels are not steered and the vehicle is in the upright position, and the vehicle is observed frontally, the radiator is arranged in the space defined between the left side of the right wheel, the right side of the left wheel, the ground and a line joining the higher points of the front wheels. The radiator thus positioned receives the maximum airflow from the forward motion of the vehicle; conversely, it is more exposed to mud, water and debris sprayed from the front wheels. In particular, this is the case when the vehicle steers and/or rolls. A mud flap thus arranged and shaped allows for a significant reduction in water, debris and mud being sprayed from the front wheels towards the median plane of the vehicle. In addition, the protuberance of the mud flap allows the vehicle to be stabilized at high speeds, acting as a stabilizing spoiler.

In particular, the front edge of the protuberance of said mud flap can extend within a contour of one of said front wheels when the vehicle is seen from a side. This particular arrangement of the mud flap allows significantly reducing the volume of water, debris, and mud that is lifted off by the wheels and would otherwise reach the radiator.

Preferably, said protuberance can have an at least double front-back extension as compared to the front-back extension of one or more of said fins. This shape allows the protuberance to protect fins and radiator from most of the splashes from underneath.

In a first version, said protuberance and said finned body can form a single piece, so as to simplify the assembly and inspection of the mud flap.

Alternatively, said protuberance and said finned body are two independent pieces. This separation of the protuberance from the finned body allows manufacturing geometrically simpler components.

Advantageously, said protuberance can be substantially triangular or trapezoidal in shape when the mud flap is seen from underneath. This shape, in addition to better deflecting air and splashes to the sides of the mud flap, allows facilitating the movement of the front steering wheels as will become clearer below in the description.

Preferably, said fins can be inclined with respect to said finned body. This arrangement of the fins allows the radiator to be protected from debris and stones.

In particular, each fin of said plurality of fins is oriented upwards so that a leading edge of the fin lies above a trailing edge of the fin. This particular inclination of the fins allows protecting more the radiator from splashes of water, debris, and mud from underneath.
Advantageously, said fins can be mutually interconnected by ribs that are oriented in the high-low direction. These ribs allow for a greater rigidity of the mud flap and reduce the risk of flap breakage due to vibrations and shocks.

These and other advantages will become more apparent from the following description of an embodiment thereof, given by way of non-limiting indication, with reference to the accompanying drawings.

### DESCRIPTION OF THE DRAWINGS

In the drawings:
Figure 1 shows a partially diagrammatic side view of a vehicle equipped with a mud flap according to the present invention;
Figure 2 shows a perspective view of a mud flap according to the present invention;
Figure 3 shows a further perspective view of a mud flap according to the present invention;
Figure 4 shows a side sectional view of a mud flap according to the present invention;
Figure 5 shows a bottom view of a vehicle equipped with a mud flap according to the present invention;
Figure 6 shows a front view of a vehicle equipped with a mud flap according to the front present invention.

### DETAILED DESCRIPTION

The following description of one or more embodiments of the invention is provided with reference to the accompanying drawings. The same reference numerals in the drawings identify equal or similar elements. The subject of the invention is defined by the appended claims. The technical details, structures, or features of the solutions described below can be combined with one another in any manner.

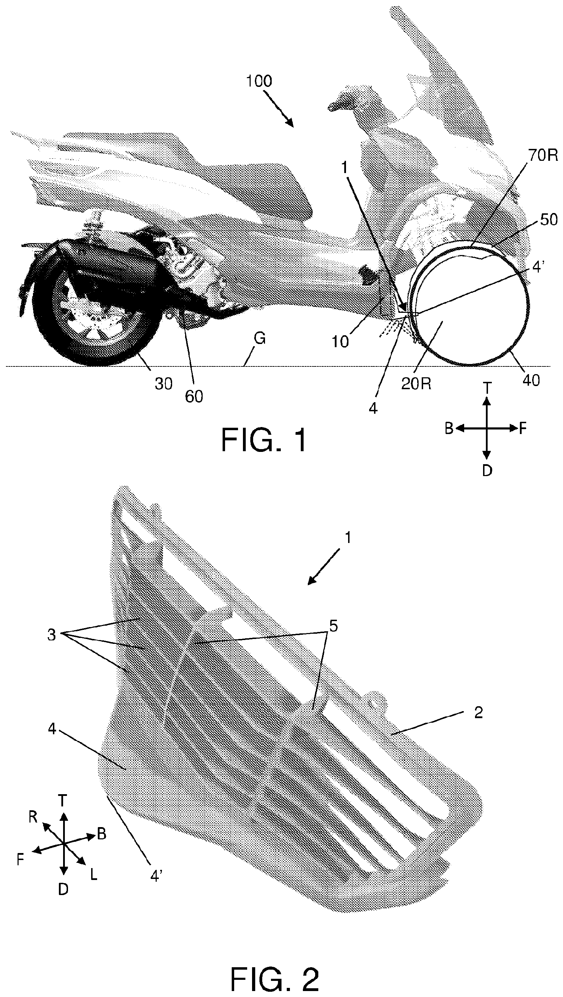

A mud flap is shown by reference numeral 1 in Figures 2, 3, and 4. The mud flap 1 shown in the figures comprises a finned body 2 provided with fins 3 and a protuberance 4.

The finned body 2 is substantially frame-shaped and comprises a plurality of horizontal fins 3 extending parallel to one another.

The fins 3 are connected, at the ends thereof, to the finned body 2 and are further connected to one another by ribs 5 extending vertically.

Fins 3 and ribs 5, together with the finned body 2, form a ventilation grid.

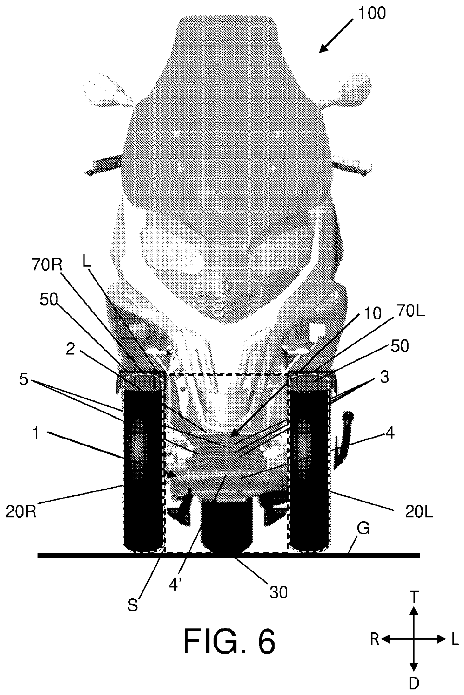

The mud flap 1 is shaped to cover at least partially a radiator 10, as shown in Figures 1 and 6. Therefore, the air intended to lap the radiator 10, in particular the fins of the radiator 10 passes through the mud flap 1.

The mud flap 1 thus acts as an aeration and protection grid for the radiator 10 and as a deflector of the splashes of water, debris and mud from the front wheels 20R, 20L, as shown in Figure 1.

The splash protection function is mainly performed by the protuberance 4.

The protuberance 4 appears as an elongation of a portion of the finned body 2.

Alternatively, the protuberance 4 can be an independent component separate from the finned body 2. In the latter case (not shown), the finned body 2 and the protuberance 4 can be connected together through connecting means, e.g., screws.

In the embodiment shown in Figures 2, 3, and 4, the protuberance 4 is a protrusion protruding forward from the finned body 2. Indeed, the two elements, finned body 2 and protuberance 4, are mutually monolithic.

The protuberance 4 is longer than the fins 3 and protrudes forward therefrom.

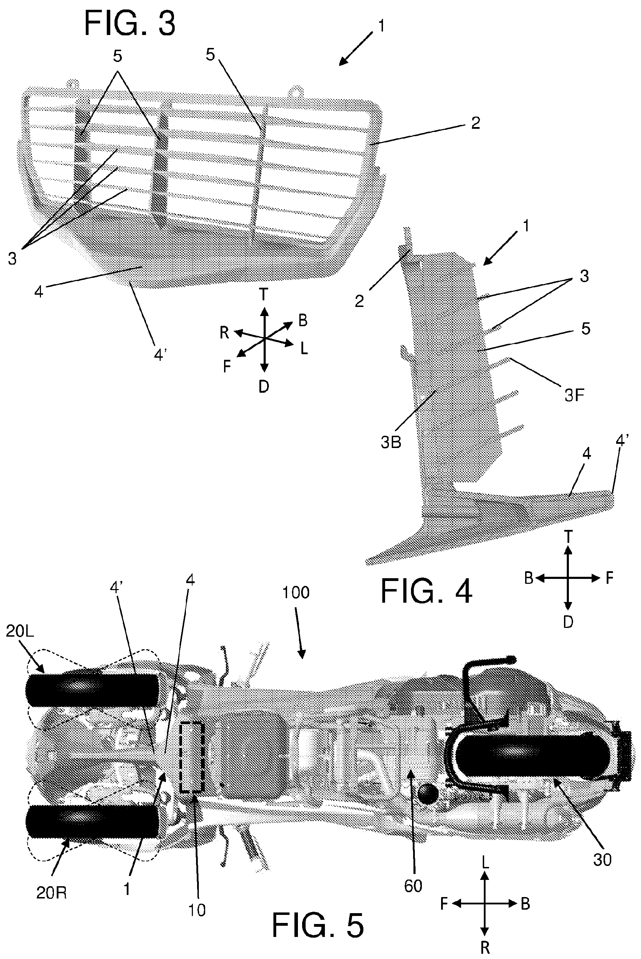

The protuberance 4 can have a double or at least double longitudinal extension as compared to one or all of fins 3, as shown in Figure 4.

The protuberance 4 lies on the lower portion of the finned body 2 because it must protect against splashes from underneath.

The fins 3 are inclined with respect to the finned body 2. In particular, the fins 3 are inclined upwards, i.e., with the trailing edge 3B of the fin 3 placed lower than the leading edge 3F of the same fin 3. The terms trailing edge and leading edge refer to the normal flow direction of an airflow flowing through the finned body 2 of the mud flap 1 during the forward motion of the vehicle 100.

The fins 3 are inclined upwards to further limit the entry of water, debris, or mud into the radiator 10. The synergistic effect of the protuberance 4 and the upwardly inclined fins 3 allows the radiator 10 to be fully protected from splashes of water, debris, or mud.

Observing the vehicle 100 from the side, as in Figure 1, the mud flap 1 is located in front of the radiator 10 and covers it at least partially.

As the vehicle 100 moves forward, water, debris and mud are lifted off by the front wheels 20R,20L, and whatever fails to be blocked by the mudguards 50 strikes into the protuberance 4, as diagrammatically shown in Figure 1.

To maximize the protective effect of the protuberance 4, it extends forward until it reaches the interior of the contour 40 of the front wheels 20R, 20L.

With reference to Figure 5, observing the mud flap 1 from underneath, the protuberance 4 thereof is substantially triangular in shape, but it could also have a trapezoidal shape.

This shape allows the wheels to be steered and tilted without bumping into the protuberance 4. Therefore, the shape of protuberance 4 is a geometric trade-off between the space of action and movement of the front wheels 20R,20L, diagrammatically shown by a dashed line in Figure 5, and the need to protect the radiator 10 from splashes.

The vehicle 100 shown in Figures 1, 5, and 6 is a three-wheeled vehicle with two front steering wheels 20R,20L, and one rear driving wheel 30.

The vehicle 100 comprises an articulated quadrilateral mechanism (not shown), which allows the frame to roll with respect to the ground, as occurs on a motorcycle of traditional type.

Further details on the kinematic mechanism which allows the vehicle 100 to roll are described in patent EP1561612A1.

The multi-wheels vehicle 100 shown in Figures 1, 5, and 6 is a three-wheel vehicle, but the vehicle 100 can equally comprise two rear driving wheels and two front steering wheels. Alternatively, unlike the vehicle 100 in Figures 1, 5, and 6, this can be configured not to roll, i.e., not to allow a tilt of the frame with respect to the ground, as is the case in a traditional motorcycle.

The fact that the vehicle 100 comprises two front rolling and steering wheels 20R,20L makes it more difficult to catch the splashes of water, debris, and mud from the front wheels 20R, 20L because the incidence of the wheels with respect to the ground is constantly changing.

Under these conditions, the mudguards 50 become ineffective and the radiator 10 is likely to become fouled with mud and debris. Nevertheless, the placement of the radiator 10 between and behind the front wheels 20R, 20L, as shown in Figures 1, 5, and 6, is optimal, because air flows freely between the front wheels 20R,20L and the radiator 10 is closer to the engine 60. As shown in Figure 6, the radiator 10 lies between the front wheels 20R, 20L and is not covered by them. In practice, the radiator 10 does not lie behind the front wheels 20R, 20L, observing the vehicle 100 from the front. Specifically, the radiator 10 lies in the space S circumscribed by the inner sides of the front wheels 20R, 20L, the ground G and the ideal line L joining the tops of the front wheels 20R, 20L. In this position, the radiator 10 receives more air because it is unobstructed by the front wheels 20R, 20L. In a rolling vehicle with three or four wheels, it is thus preferable to place the radiator 10 behind and in the middle between the front wheels 20R,20L. For this reason, the mud flap 1 of the present invention allows protecting the placement of the radiator 10 behind the wheels, without limiting the functionality or efficiency thereof.

Indeed, by virtue of the mud flap 1 of the present invention, it is possible to place the radiator 10 immediately behind the finned body 2 of the mud flap 1, without having to set it further back therefrom. The air flowing through the radiator 10 is thus maximized and substantially corresponds to the air flowing through the finned body 2 and the fins 3 thereof.

Moreover, the protuberance 4 has an additional beneficial effect. By virtue of the extension thereof, it also acts as a spoiler, allowing for improved aerodynamics and downforce of the vehicle 100. The downforce of the spoiler, which is created by virtue of the protuberance 4, allows lowering the forecarriage of the vehicle 100 at high speeds, thus improving the grip thereof on the ground and also reducing vibrations, which can be a cause of instability of the vehicle 100.

## Claims

1. Multi-wheels rolling vehicle (100) comprising:
- two front steering and rolling wheels (20R,20L) space each other along a right-left direction;
- at least one rear driving and rolling wheel (30);
- a radiator (10) arranged behind and between said front steering wheels (20R,20L) so that, when the front wheels (20R,20L) are not steered and the vehicle (100) is in the upright position, and the vehicle (100) is observed frontally, the radiator (10) is arranged in the space (S) defined between the left side of the right wheel (20R), the right side of the left wheel (20L), the ground (G) and a line (L) joining the higher points (70) of the front wheels (20R, 20L);
- a mud flap (1) arranged in front of said radiator (10) so as to cover it at least partially;
wherein the mud flap (1) comprises:
- a finned body (2) comprising a plurality of fins (3) configured to cover the radiator (10) at least partially; the vehicle **characterised by**
- a protuberance (4) arranged on a lower portion of said finned body (2);
wherein said protuberance (4) is shaped so as to protrude forward with respect to the finned body (2) and the protuberance (4) is longer than the fins (3) and protrudes forward therefrom.

2. Multi-wheels rolling vehicle (100) according to claim 1, wherein a front edge (4') of the protuberance (4) of said mud flap (1) extends within a contour (40) of one of said front wheels (20R,20L) when the vehicle (100) is observed from one side.

3. Multi-wheels rolling vehicle (100) according to claim 1 or 2, wherein said protuberance (4) has an at least double front-back extension as compared to the front-back extension of one or more of said fins (3).

4. Multi-wheels rolling vehicle (100) according to any one of the preceding claims, wherein said protuberance (4) and said finned body (2) are a single piece.

5. Multi-wheels rolling vehicle (100) according to any one of the claims from 1 to 3, wherein said protuberance (4) and said finned body (2) are two independent pieces.

6. Multi-wheels rolling vehicle (100) according to any one of the preceding claims, wherein said protuberance (4) is substantially triangular or trapezoidal in shape when the mud flap (1) is observed from below.

7. Multi-wheels rolling vehicle (100) according to any one of the preceding claims, wherein said fins (3) are inclined with respect to said finned body (2).

8. Multi-wheels rolling vehicle (100) according to claim 7, wherein each fin (3) of said plurality of fins is oriented upwards so that a leading edge (3F) of the fin (3) lies above a trailing edge (3B) of the fin (3).

9. Multi-wheels rolling vehicle (100) according to any one of the preceding claims, wherein said fins (3) are interconnected to one another by means of ribs (5) oriented in an up-down direction.

## Patentansprüche

1. Mehrrädriges Rollfahrzeug (100), umfassend:
- zwei vordere Lenk- und Laufräder (20R,20L), die entlang einer Rechts-Links-Richtung voneinander beabstandet sind;
- mindestens ein hinteres Antriebs- und Laufrad (30);
- einen Kühler (10), der hinter und zwischen den genannten vorderen Lenkrädern (20R,20L) angeordnet ist, so dass, wenn die Vorderräder (20R,20L) nicht eingeschlagen sind und sich das Fahrzeug (100) in der aufrechten Position befindet, und wenn das Fahrzeug (100) von vorne betrachtet wird, der Kühler (10) in dem Raum (S) angeordnet ist, der zwischen der linken Seite des rechten Rades (20R), der rechten Seite des linken Rades (20L), dem Boden (G) und einer Linie (L), welche die oberen Punkte (70) der Vorderräder (20R, 20L) verbindet, definiert ist;
- eine Schlammklappe (1), die vor dem genannten Kühler (10) angeordnet ist, um diesen zumindest teilweise abzudecken;
wobei die Schlammklappe (1) umfasst:
- einen Lamellenkörper (2), umfassend eine Vielzahl von Lamellen (3), die dazu ausgebildet sind, den Kühler (10) zumindest teilweise abzudecken; das Fahrzeug ist **gekennzeichnet durch**
- einen Vorsprung (4), der an einem unteren Abschnitt des genannten Lamellenkörpers (2) angeordnet ist;
wobei der genannte Vorsprung (4) derart geformt ist, dass er in Bezug auf den Lamellenkörper (2) nach vorne vorsteht, und der Vorsprung (4) länger als die Lamellen (3) ist und von diesen nach vorne vorsteht.

2. Mehrrädriges Rollfahrzeug (100) nach Anspruch 1, wobei sich eine Vorderkante (4') des Vorsprungs (4) der genannten Schlammklappe (1) innerhalb einer Kontur (40) eines der genannten Vorderräder (20R,20L) erstreckt, wenn das Fahrzeug (100) von einer Seite betrachtet wird.

3. Mehrrädriges Rollfahrzeug (100) nach Anspruch 1 oder 2, wobei der genannte Vorsprung (4) eine Erstreckung in Vorne-Hinten-Richtung aufweist, die mindestens doppelt so groß wie die Erstreckung in Vorne-Hinten-Richtung einer oder mehrerer der genannten Lamellen (3) ist.

4. Mehrrädriges Rollfahrzeug (100) nach einem der vorhergehenden Ansprüche, wobei der genannte Vorsprung (4) und der genannte Lamellenkörper (2) einstückig ausgebildet sind.

5. Mehrrädriges Rollfahrzeug (100) nach einem der Ansprüche 1 bis 3, wobei der genannte Vorsprung (4) und der genannte Lamellenkörper (2) zwei voneinander unabhängige Teile sind.

6. Mehrrädriges Rollfahrzeug (100) nach einem der vorhergehenden Ansprüche, wobei der genannte Vorsprung (4) eine im Wesentlichen dreieckige oder trapezförmige Form aufweist, wenn die Schlammklappe (1) von unten betrachtet wird.

7. Mehrrädriges Rollfahrzeug (100) nach einem der vorhergehenden Ansprüche, wobei die genannten Lamellen (3) in Bezug auf den genannten Lamellenkörper (2) geneigt sind.

8. Mehrrädriges Rollfahrzeug (100) nach Anspruch 7, wobei jede Lamelle (3) der genannten Vielzahl von Lamellen nach oben ausgerichtet ist, so dass eine Anströmkante (3F) der Lamelle (3) über einer Abströmkante (3B) der Lamelle (3) liegt.

9. Mehrrädriges Rollfahrzeug (100) nach einem der vorhergehenden Ansprüche, wobei die genannten Lamellen (3) mittels Rippen (5), die in einer Oben-Unten-Richtung ausgerichtet sind, miteinander verbunden sind.

## Revendications

1. Véhicule roulant à roues multiples (100) comprenant :
- deux roues avant directrices et roulantes (20R, 20L) espacées l'une de l'autre selon une direction droite-gauche ;
- au moins une roue arrière motrice et roulante (30) ;
- un radiateur (10) disposé derrière et entre lesdites roues avant directrices (20R, 20L) de sorte que, lorsque les roues avant (20R, 20L) ne sont pas braquées et que le véhicule (100) est en position verticale, et que le véhicule (100) est observé de face, le radiateur (10) est disposé dans l'espace (S) défini entre le côté gauche de la roue droite (20R), le côté droit de la roue gauche (20L), le sol (G) et une ligne (L) reliant les points supérieurs (70) des roues avant (20R, 20L) ;
- un garde-boue (1) disposé devant ledit radiateur (10) de manière à le recouvrir au moins partiellement ;
dans lequel le garde-boue (1) comprend :
- un corps à ailettes (2) comprenant une pluralité d'ailettes (3) configurées pour recouvrir le radiateur (10) au moins partiellement, le véhicule étant **caractérisé par**
- une protubérance (4) disposée sur une partie inférieure dudit corps à ailettes (2) ;
dans lequel ladite protubérance (4) est formée de manière à faire saillie vers l'avant par rapport au corps à ailettes (2) et la protubérance (4) est plus longue que les ailettes (3) et fait saillie vers l'avant à partir de celles-ci.

2. Véhicule roulant à roues multiples (100) selon la revendication 1, dans lequel un bord avant (4') de la protubérance (4) dudit garde-boue (1) s'étend à l'intérieur d'un contour (40) de l'une desdites roues avant (20R, 20L) lorsque le véhicule (100) est observé depuis un côté.

3. Véhicule roulant à roues multiples (100) selon la revendication 1 ou 2, dans lequel ladite protubérance (4) présente au moins une extension avant double par rapport à l'extension avant d'une ou plusieurs desdites ailettes (3).

4. Véhicule roulant à roues multiples (100) selon l'une quelconque des revendications précédentes, dans lequel ladite protubérance (4) et ledit corps à ailettes (2) sont une seule pièce.

5. Véhicule roulant à roues multiples (100) selon l'une quelconque des revendications 1 à 3, dans lequel ladite protubérance (4) et ledit corps à ailettes (2) sont deux pièces indépendantes.

6. Véhicule roulant à roues multiples (100) selon l'une quelconque des revendications précédentes, dans lequel ladite protubérance (4) présente une forme sensiblement triangulaire ou trapézoïdale lorsque le garde-boue (1) est observé par dessous.

7. Véhicule roulant à roues multiples (100) selon l'une quelconque des revendications précédentes, dans lequel lesdites ailettes (3) sont inclinées par rapport audit corps à ailettes (2).

8. Véhicule roulant à roues multiples (100) selon la revendication 7, dans lequel chaque ailette (3) de ladite pluralité d'ailettes est orientée vers le haut de sorte qu'un bord d'attaque (3F) de l'ailette (3) se trouve au-dessus d'un bord de fuite (3B) de l'ailette (3).

9. Véhicule roulant à roues multiples (100) selon l'une quelconque des revendications précédentes, dans lequel lesdites ailettes (3) sont reliées les unes aux autres au moyen de nervures (5) orientées selon une direction haut-bas.
